# EUROPÄISCHE PATENTSCHRIFT

(11) **EP 0 440 847 B1**
(45) Veröffentlichungstag und Bekanntmachung des Hinweises auf die Patenterteilung: **11.05.1994**
(21) Anmeldenummer: 90102379.6
(22) Anmeldetag: 06.02.1990
(51) Int. Cl.: G01N 23/18, G01M 17/02

(54) **Vorrichtung zur Röntgenprüfung eines Kraftfahrzeugreifens**
Appparatus for X-ray testing of a vehicle tyre
Appareil pour l'examen aux rayons X d'un pneumatique de véhicule

(43) Veröffentlichungstag der Anmeldung: 14.08.1991
(73) Patentinhaber: Spezialmaschinenbau Steffel GmbH & Co. KG, D-23909 Ratzeburg (DE)
(72) Erfinder: Steffel, Horst, D-2401 Gross Grönau (DE)
(74) Vertreter: Patentanwälte Hauck, Graalfs, Wehnert, Döring, Siemons

(56) Entgegenhaltungen:
- EP-A- 0 315 099
- ELECTRONIQUE INDUSTRIELLE, Nr. 66, 1. März 1984, Seiten 19-20, Paris, FR; H. ROUGEOT: Les détecteurs X sensibles à l'etat solide pour le contrôle non destructif"

## Beschreibung

Die Erfindung bezieht sich auf eine Vorrichtung zur allseitigen Röntgenprüfung eines drehbar abgestützten Kraftfahrzeugreifens während der Reifenumdrehung nach dem Oberbegriff des Patentanspruchs 1.

Eine derartige Vorrichtung ist aus der EP-A-0 315 099 bekanntgeworden. Sie verwendet eine Röntgenrundstrahlröhre, die nahe an der offenen Seite innerhalb des vom Reifen umfaßten Raums angeordnet ist. Die von ihr ausgehende Strahlung durchstrahlt die Reifenseitenwände und die Reifenlauffläche von innen nach außen und trifft auf lineare Diodenanordnungen lichtempfindlicher Dioden, die annähernd durchmesserparallel bzw. achsparallel angeordnet sind. Den Diodenanordnungen ist eine Abtasteinrichtung zugeordnet, die die Dioden mit einer vorgegebenen Abtastfrequenz abtastet. Die Ausgangssignale der Dioden werden auf einen Speicher gegeben. Eine aus einzelnen Bildpunkten bestehende Wiedergabevorrichtung erzeugt pro Abtastsequenz für eine Diodenanordnung eine Bildzeile. Auf diese Weise wird auf dem Bildschirm ein bestimmter Flächenabschnitt des zu prüfenden Reifenabschnitts abgebildet, wobei die Größe des Flächenabschnitts von der Abtastgeschwindigkeit und von der Drehgeschwindigkeit des Reifens abhängt. Die Diodenanordnungen sind in ihrem Abstand vom Reifen vorzugsweise verstellbar angeordnet, um ihren Abstand zur Außenseite der Reifenflanken bzw. der Reifenlauffläche gleichzuhalten und damit einen konstanten Abbildungsmaßstab zu erzielen.

Die Röntgenprüfung von Kraftfahrzeugreifen beruht auf der Tatsache, daß das Reifengrundmaterial und die Einlagen die Röntgenstrahlung unterschiedlich absorbieren. Zwischen dem Grundmaterial des Reifens und z.B. Stahleinlagen läßt sich ein relativ deutlicher Kontrast erzielen. Es ist auch bekannt, Reifen mit Textileinlagen (Kunststoffcord) zu verstärken, insbesondere die Reifenflanken. Derartige Einlagen weisen gegenüber Gummi eine geringere Dichte auf und erzeugen einen relativ schwachen Kontrast. Reifen, die sowohl Stahl- als auch textile Einlagen aufweisen, können daher nicht gleichzeitig geprüft werden. Um zum Beispiel bei Kunststoffcord eine zufriedenstellende Auflösung zu erhalten, muß die Röntgenrundstrahlröhre mit relativ kleiner Spannung betrieben werden. Diese Spannung reicht indessen nicht aus, um die Struktur von Stahleinlagen genügend sichtbar zu machen. Es ist daher nötig, unterschiedliche Spannungen einzustellen je nachdem, weiche Reifenverstärkung untersucht werden soll.

Bei der Vorrichtung gemäß EP-A-0 315 099 sind die Dioden der Diodenanordnungen in einem eine hohe Auflösung bewirkenden, insbesondere textile Einlagen im Reifen ausreichend sichtbar machenden Abstand angeordnet. Der Abstand der Dioden, insbesondere der den Reifenflanken zugeordneten Diodenzeilen, ist so bemessen, daß - bei entsprechend gewählter Spannung an der Röntgenröhre - auch eine ausreichende Auflösung bei Kunststoffcord erzielt wird. Der Abstand beträgt zum Beispiel weniger als 0,5 mm, vorzugsweise weniger als 0,3 mm oder kleiner. In Anpassung an herkömmliche Bildwiedergebevorrichtungen bedeutet dies eine Anzahl von 1024 Dioden pro Diodenreihe bzw. 2048. Insbesondere die letztere Anzahl von Dioden pro Reihe ist vollständig ausreichend, bei entsprechender Betriebsspannung der Röntgenrundstrahlröhre eine zufriedenstellende Auflösung bei Kunststoffadeneinlagen zu erreichen.

Der Erfindung liegt die Aufgabe zugrunde, eine Vorrichtung zur allseitigen Röntgenprüfung eines drehbar abgestützten Kraftfahrzeugreifens so auszubilden, daß sowohl Reifen mit Stahl- als auch Textileinlagen in kürzestmöglicher Zeit geprüft werden können.

Diese Aufgabe wird gelöst durch die Merkmale des Kennzeichnungsteils des Patentanspruchs 1.

Bei einer vorgegebenen Abtastfrequenz hängt die Dauer einer Abtastsequenz von der Anzahl der abgetasteten Dioden pro Diodenzeile ab. Mithin wird der Vorteil einer höheren Auflösung mit einer längeren Prüfzeit erkauft. Da nun der Anteil Kunststoffcord aufweisender Reifen im Verhältnis zu Reifen, die ausschließlich Stahleinlagen aufweisen, gering ist, würde eine Anlage, die sowohl Reifen mit Kunststoffcord als auch Stahlcord zu prüfen in der Lage ist, eine relativ lange Prüfdauer pro Kraftfahrzeugreifen verursachen. Hier setzt das Merkmal der Erfindung ein, bei dem mit Hilfe einer entsprechenden Umschaltvorrichtung die Abtasteinrichtung wahlweise nur jede zweite, dritte usw.

Diode einer Diodenzeile abgetastet wird. Die erfindungsgemäße Vorrichtung ist daher im Hinblick auf den Aufbau der Diodenzeilen so ausgelegt, daß für die Prüfung von Reifen mit Kunststoffcord eine zufriedenstellende Auflösung erzielt wird. Wird zum Beispiel bei Stahlcord diese Auflösung nicht benötigt, tastet die Abtasteinrichtung nicht sämtliche Dioden einer Diodenreihe ab, sondern nur jede zweite, dritte usw. Dadurch wird naturgemäß die Abtastzeit um die Hälfte, um ein Drittel usw. verringert. Bei der erfindungsgemäßen Vorrichtung wird daher in Abhängigkeit von den Eigenschaften der verstärkenden Einlagen eine optimale Prüfzeit für die zu prüfenden Reifen erhalten. Es versteht sich, daß die Abtastung der Diodenzeilen entgegen einer Abtastung in linearer Folge auch block- oder gruppenweise erfolgen kann. Bei einer Abtastung mit geringerer Auflösung wird dann immer nur ein Teil der Dioden einer Gruppe bzw. eines Blocks abgetastet, d.h. vorgegebene Dioden (z.B. die geradzahligen einer Reihe) werden bei der Abtastung übersprungen.

Die Erfindung wird nachfolgend anhand eines Ausführungsbeispiels näher erläutert.

Die einzige Figur zeigt äußerst schematisch ein Blockschaltbild der Vorrichtung nach der Erfindung.

In der Zeichnung sind zwei in der Größe unterschiedliche Reifen 10, 11 gezeigt. Ihre Lauffläche 14, 14′ ist mit einem Stahlcord versehen. Die Flanken oder Seitenwände 12, 13 bzw. 12′, 13′ sind je nach Reifentyp mit einem Stahlcord oder einem Kunststoffcord versehen. Der Reifen 10 bzw. 11 ist um seine Achse in bekannter Weise drehbar abgestützt. Er wird mit Hilfe einer nicht gezeigten Drehvorrichtung um seine Achse 23 gedreht, die zum Beispiel in einer vertikalen Ebene liegt, wobei die Umfangsgeschwindigkeit vom Bedienungsmann vorgegeben und geändert werden kann. Die entsprechenden konstruktiven Vorkehrungen hierfür sind nicht gezeigt; sie sind Stand der Technik. Auch die bei Röntgenprüfvorrichtungen üblichen Schutzvorkehrungen sind nicht gezeigt.

Man erkennt ferner, daß eine Röntgenrundstrahlröhre 16 am Eingang der Reifen 10 bzw. 11 angeordnet ist. In einer radialen Ebene zum Reifen (hier in der Zeichenebene) weist die Röntgenrundstrahlröhre 16 zum Beispiel einen Strahlungswinkel von etwa 300° auf. In der radialen Ebene werden daher alle Bereiche des Reifens von der Strahlung der Röhre 16 durchstrahlt, und zwar annähernd in einem Durchstrahlwinkel von 90°. Es versteht sich, daß die Lage der Röntgenrundstrahlröhre 16 auch verlegt werden kann, zum Beispiel weiter in den Reifen hinein oder auch weiter außerhalb. In einer Ebene senkrecht zur Radialebene weist die Röhre 16 einen Strahlungswinkel von zum Beispiel 40° auf.

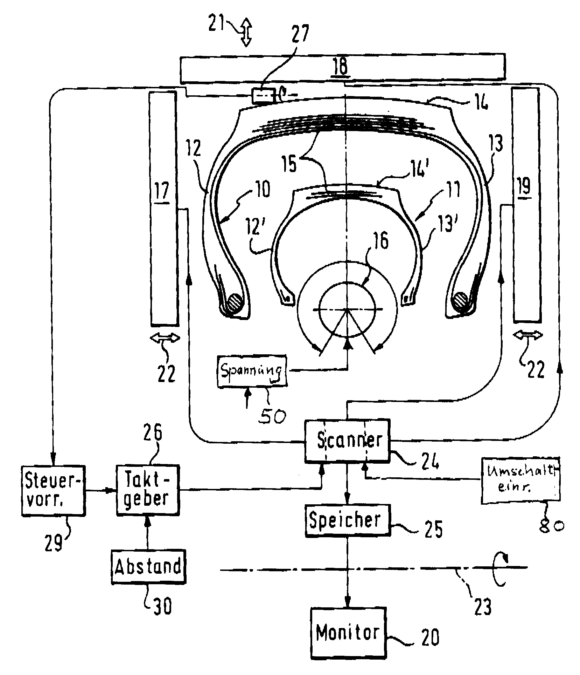

Auf der Außenseite der Reifenflanken 12, 13 bzw. 12′, 13′ und der Außenseite der Lauffläche 14 bzw. 14′ sind Diodenanordnungen 17, 18, 19 vorgesehen. In Fig. 1 sind diese lediglich schematisch angedeutet. Jede Diodenanordnung 17 bis 19 enthält eine lineare Anordnung einzelner lichtempfindlicher Dioden, zum Beispiel 2048 pro Diodenanordnung in einem Abstand von 0,225 mm, deren Empfangsfläche mit einer fluoreszierenden Schicht versehen ist, die aus den Röntgenstrahlen ein für die Dioden verwertbares Licht erzeugt. Die Anordnung der Diodenreihen ist annähernd parallel zum Durchmesser bzw. parallel zur Achse der Reifen 10 bzw. 11. Die Dioden werden von einem Scanner 24 periodisch abgetastet, wobei die abgetasteten Signale in bekannter Weise im Speicher 25 so gespeichert werden, daß eine Reihe von Abtastungen gleichzeitig auf einer Wiedergabevorrichtung 20, beispielsweise einem Bildschirm, erscheint. Die Wiedergabevorrichtung 20 ist ebenfalls schematisch angedeutet. Sie besteht aus drei einzelnen Bildschirmen (nicht gezeigt).

Die Abtastgeschwindigkeit des Scanners wird von einem Taktgeber 26 vorgegeben. Der Lauffläche 14, 14′ der Reifen 10, 11 ist ein Geschwindigkeitsfühler 27, zum Beispiel eine Tachometerrolle, zugeordnet. Sein Ausgangssignal geht auf eine Steuervorrichtung 29, die mit dem Taktgeber 26 verbunden ist. Die Abtastgeschwindigkeit des Scanners 24 wird nach Maßgabe der Geschwindigkeit der Reifen 10, 11 variiert, um einen gleichen Abbildungsmaßstab bei vorgegebenem Abstand der Diodenanordnungen 17 bis 19 vom Reifen zu erhalten. Für die Reifengeschwindigkeit der Flanken errechnet die Steuervorrichtung 29 einen Mittelwert. Die Abstastung für die Lauffläche 14, 14′ einerseits und für die Flanken 12, 12′ andererseits ist daher unterschiedlich. Ändert sich der Abstand der Diodenanordnungen 17 bis 19 in bezug auf den Reifen 10 bzw. 11, muß die Taktfrequenz ebenfalls geändert werden. Dies ist durch Block 30 angedeutet. Wie durch die Doppelpfeile 21 und 22 angedeutet, können die Diodenanordnungen 17 bis 19 relativ zum Reifen 11, 12 verstellt werden. Dies wird im einzelnen nicht beschrieben und ist zum Beispiel aus der eingangs erwähnten EP-A-0 315 099 bekannt.

Die Spannungsversorgung ist in der Zeichnung durch den Block 50 angedeutet. Die Spannung kann variiert werden, um einen optimalen Kontrast zu erzeugen. Kunststoffcord benötigt eine "weichere" Spannung als Stahlcord. Außerdem hängt die Spannung von der Dicke des zu prüfenden Materials ab. Der Block 50 kann daher auch mit einer Vorrichtung verbunden sein, welche Signale aus einer Dickenmeßvorrichtung erhält.

Die Dioden der Diodenanordnungen 17 bis 19 sind sehr dicht nebeneinander angeordnet, wie bereits erwähnt. Ihr Abstand beträgt zum Beispiel 0,225 mm. Es versteht sich, daß der Bildschirm des Monitors 20 eine entsprechende Anzahl von Bildpunkten pro Zeile aufweist. Die Abtastgeschwindigkeit ist relativ hoch, vorzugsweise 1 Pixel pro Millisekunde.

Dem Scanner 24 ist eine Umschalteinrichtung 80 zugeordnet. Die Umschalteinrichtung dient dazu, die Anzahl der pro Diodenreihe abzutastenden Dioden zu verändern. Beispielsweise kann der Scanner 24 so eingestellt werden, daß er nur jede zweite Diode einer Diodenreihe der Diodenanordnungen 17 bis 19 abtastet. Es versteht sich, daß die Auflösung bei einer Abtastung von nur jeder zweiten, dritten usw. Diode geringer ist als bei einer Abtastung jeder Diode; die schlechtere Auflösung reicht jedoch bei entsprechendem geringem Diodenabstand unter Umständen aus, zum Beispiel Stahleinlagen sicher zu erkennen. Ist hingegen erforderlich, textile Einlagen zu prüfen, bewirkt die Umschalteinrichtung 80, daß alle vorhandenen Dioden einer Diodenreihe zyklisch abgetastet werden.

Da, wie bereits erwähnt, in der Lauffläche regelmäßig Stahleinlagen vorhanden sind, während ein Teil der zu prüfenden Reifen Kunststoffeinlagen in den Reifenflanken aufweist, ist auch denkbar, die Diodenanordnungen 18 für die Lauffläche mit einer geringeren Anzahl von Dioden zu versehen, beispielsweise 1024, die bei jeder Sequenz sämtlich abgetastet werden. Nur die den Reifenflanken zugeordneten Diodenanordnungen 17 und 19 weisen dann jeweils 2048 Dioden auf, deren Abtastungsanordnung sich nach der Beschaffenheit des zu prüfenden Materials richtet.

## Patentansprüche

1. Vorrichtung zur allseitigen Röntgenprüfung eines drehbar abgestützten Kraftfahrzeugreifens (10, 11) während einer Reifenumdrehung, mit einer Röntgenrundstrahlröhre (16), die in dem vom Reifen umschlossenen Raum nahe seiner offenen Innenseite so angeordnet ist, daß die von ihr ausgehende Strahlung die Reifenseitenwandungen (12, 12', 13, 13') und die Reifenlauffläche (14, 14') von innen nach außen durchstrahlt, drei linearen Diodenanordnungen (17, 18, 19) lichtempfindlicher Dioden, die außerhalb des Reifens vorzugsweise durchmesserparallel bzw. achsparallel angeordnet sind, wobei die Dioden in einem eine hohe Auflösung bewirkenden, insbesondere textile Einlagen im Reifen (10, 11) sichbar machenden Abstand angeordnet sind, vorzugsweise gleich oder kleiner als 0,5 mm, und einer den Diodenanordnungen zugeordneten Abtasteinrichtung (24), die die Dioden mit einer vorgegebenen, jedoch veränderbaren Abtastfrequenz abtastet und die die Ausgangssignale der Dioden auf einen Speicher (25) gibt, und einer aus einzelnen Bildpunkten bestehenden Wiedergabevorrichtung (20) zur Erzeugung jeweils einer Bildzeile pro Abtastsequenz für eine Diodenanordnung, dadurch gekennzeichnet, daß der Abtasteinrichtung (24) eine Umschalteinrichtung (80) zugeordnet ist dergestalt, daß bei einer vorgegebenen Abtastfrequenz während einer Abtastsequenz wahlweise nur jede zweite, dritte usw. Diode abtastbar ist.

2. Vorrichtung nach Anspruch 2, dadurch gekennzeichnet,daß der Abstand der Dioden 0,3 mm oder kleiner ist.

3. Vorrichtung nach Anspruch 1 oder 2, bei der die Abtasteinrichtung (24) für jede Diodenanordnung eine eigene Abtasteinrichtung aufweist, und bei der die Umschaltvorrichtung (80) den den Reifenseitenwandungen zugeordneten Diodenanordnungen (17, 19) zugeordnet ist.

4. Vorrichtung nach einem der Ansprüche 1 bis 3, dadurch gekennzeichnet, daß die Abtastgeschwindigkeit mindestens 10 m/Sek., vorzugsweise 1 Pixel pro Millisekunde, beträgt.

## Claims

1. Apparatus for allover X-ray testing of a vehicle wire (10,11) being supported for rotation and rotated while being tested, comprising an omnidirectional X-ray tube (16) which is so located in the housing sealed by said tire adjacent to the open inside thereof that the radiation received from said X-ray tube is penetrating the side walls (12, 12', 13, 13') and the treads (14, 14') of said tire from inside to outside, three linear diode arrays (17, 18, 19) of light sensitive diodes which are located on the outside of said tire and,preferably, extending parallel to the diameter or parallel to the axis, said diodes are spaced from each other so as to obtain a high resolution and to make visible in particular textile re-enforcements in said tire (10), 11), the spacing distance preferably being 0,5 mm or less, and a scanning means (24) associated with said diode arrays for scanning said diodes at a predetermined but variable scanning frequency and for storing the output signals of said diodes in a storage (25), and a reproduction device (20) comprising individual picture elements for generating one image line for each scanning sequence in each diode array, characterized in that said scanning means (24) is associated with switch means (80) so that said scanning means may selectively scan only each second, third, etc. diode at a predetermined scanning frequency in a scanning sequence.

2. Apparatus according to claim 1, characterized in that the spacing of the diodes is 0,3 mm or less.

3. Apparatus according to claim 1 or 2, characterized in that said scanning means (24) comprises an own scanning means for each diode array and that said switch means (80) is associated with said diode arrays (17, 19) associated with the tire side walls.

4. Apparatus according to any of the claims 1 to 3, characterized in that the scanning speed is at least 10 m/sec., preferably 1 pixel/millisecond.

## Revendications

1. Dispositif pour l'examen aux rayons X, de tous côtés, d'un pneumatique (10,11) de véhicule automobile, supporté de manière à pouvoir tourner, pendant une rotation de ce pneumatique,
comportant un tube à rayons X (16) à émission circulaire, qui est disposé dans l'espace entouré par le pneumatique, à proximité de son côté intérieur ouvert de sorte que le rayonnement, émis par le tube à rayons X, traverse de l'intérieur vers l'extérieur les parois latérales (12,12', 13,13') et la surface de roulement (14,14') du pneumatique, et trois ensembles linéaires (17,18,19) de diodes photosensibles, qui sont disposés à l'extérieur du pneumatique, de préférence parallèlement à un diamètre ou à l'axe, les diodes étant disposées à une distance, de préférence égale ou inférieure à 0,5 mm, qui fournit une résolution élevée et permet de visualiser notamment des inserts textiles dans le pneumatique (10,11),
et comportant un dispositif d'exploration (24), qui est associé aux ensembles de diodes et qui explore les diodes avec une fréquence de balayage prédéterminée, mais modifiable, et envoie les signaux de sortie des diodes à une mémoire (25), et un dispositif de reproduction (20) qui est constitué par des points d'image distincts et sert à produire respectivement une ligne de l'image lors de chaque séquence d'exploration d'un ensemble de diodes,
caractérisé en ce qu'un dispositif de commutation (80) est associé au dispositif d'exploration (24) de telle sorte que, pour une fréquence prédéterminée, au choix seule une diode sur deux, sur trois, etc., peut être explorée pendant une séquence d'exploration.

2. Dispositif selon la revendication 1, caractérisé en ce que la distance entre les diodes est égale ou inférieure à 0,3 mm.

3. Dispositif selon la revendication 1 ou 2, dans lequel le dispositif d'exploration (24) pour chaque ensemble de diodes possède un dispositif d'exploration particulier, et dans lequel le dispositif de commutation (80) est associé aux ensembles de diodes (17,19), qui sont associés aux parois latérales du pneumatique.

4. Dispositif selon l'une des revendications 1 à 3, caractérisé en ce que la vitesse d'exploration est égale au moins à 10 m/s et de préférence à 1 pixel par milliseconde.
